# EUROPEAN PATENT SPECIFICATION

(11) **EP 3 562 311 B1**
(45) Date of publication and mention of the grant of the patent: **18.08.2021**
(21) Application number: 17821948.1
(22) Date of filing: 28.12.2017
(51) Int. Cl.: A23D 9/02, A23J 1/14, C11B 1/10, A23J 1/00, A23L 2/66, C11B 1/02, C11B 3/04

(54) **A METHOD FOR THE FRACTIONATION OF A LIPID FRACTION AND A PROTEIN FRACTION FROM A LIPID AND PROTEIN CONTAINING BIOMASS**
VERFAHREN ZUR FRAKTIONIERUNG EINER LIPIDFRAKTION UND EINER PROTEINFRAKTION AUS EINEM BIOMASSEHALTIGEN LIPID UND PROTEIN
PROCÉDÉ DE SÉPARATION D'UNE FRACTION LIPIDIQUE ET D'UNE FRACTION PROTÉIQUE À PARTIR D'UNE BIOMASSE CONTENANT DES LIPIDES ET DES PROTÉINES

(30) Priority: 28.12.2016 EP 16207109
(43) Date of publication of application: 06.11.2019
(73) Proprietor: VITO NV, 2400 Mol (BE)
(72) Inventor: D'HONDT, Els, 2400 Mol (BE); UYTTEBROEK, Maarten, 2400 Mol (BE); SOETEMANS, Lise, 2275 Lille (BE); BASTIAENS, Leen, 2400 Mol (BE)
(74) Representative: V.O.
(86) International application number: PCT/EP2017/084694
(87) International publication number: WO 2018/122294

(56) References cited:
- EP-A2- 0 848 911
- WO-A1-2013/191548
- US-A- 3 941 764
- US-A- 4 455 302
- US-A1- 2004 214 300
- TZOMPA-SOSA DAYLAN A ET AL: "Insect lipid profile: aqueous versus organic solvent-based extraction methods", FOOD RESEARCH INTERNATIONAL, vol. 62, 6 June 2014 (2014-06-06), pages 1087-1094, XP028863631, ISSN: 0963-9969, DOI: 10.1016/J.FOODRES.2014.05.052

## Description

The present invention relates to a method for simultaneously recovering in aqueous medium, from a lipid and protein containing biomass, of a lipid fraction and a protein fraction, wherein the method comprises a refining step to extract the lipid and protein fraction from the biomass, according to the preamble of the first claim.

Insects form an interesting food source, potentially nutritious, rich in protein, lipids, minerals and vitamins. Despite the fact that they have a high nutritional value, the majority of the human population dislikes insect consumption. A means to improve their acceptance as a food ingredient, could involve the extraction of the insect proteins and lipids and using those extracts as a food ingredient. Other possible applications of proteins, lipids, minerals and vitamins which originate from insects include their use as a structural element in adhesives in wood industry, and their use in compound formulations for technical applications in general.

The separation of fat from animal residues, for example animal tissue, is often performed by a process called dry rendering. The fats are removed by boiling the tissues and drainage of the free fat (Verhé et al., 2004). Fish oil may be produced in a similar way. The process of rendering however presents the disadvantage that it needs to be carried out at relatively high temperature, as a result of which proteins contained in the animal tissue are denaturized and loose part or all of their functionality. The result is a protein hydrolysate fraction with nutritional value, but with no or limited functionality. Separation of lipids from a biomass may also be carried out via drying and pressing (Hu et al., 2010). Again, the drying step which is carried out at elevated temperature causes protein denaturation. The press cake obtained after lipid separation can be used as a protein source for example in animal feed (Kroeckel et al., 2012). According to another process, lipids may be extracted from biomass via drying and solvent extraction (Herrera, 2012; Tzompa-Soza et al. 2014). The remaining press cake is treated as chemical waste.

Proteins may have a wide variety of functions. Examples hereof are structural proteins which intervene in maintaining cell shape, structural proteins which compose structural elements in connective tissues like cartilage and bone in vertebrates, enzymes which catalyze biochemical reactions in cells, proteins functioning as monitors which change their shape and activity in response to metabolic or external signals, cells may secrete various proteins that become part of the extracellular matrix or are involved in intercellular communication. The chemical composition and structure of a protein will usually vary with the nature of its function. Furthermore, technical protein functionalities like gelling, foaming, emulsifying,... are important for food, feed, cosmetics, consumer goods and the chemical industry. Bioactive functionalities like anti-microbial, anti-oxidant, antifouling, anti-hypertensive, saturation,... can also be distinguished for proteins and peptides.

Yi et al. (2013) investigated if insects could be used as a future protein source in food, and evaluated insect protein characteristics and functionality. Thereto, freeze dried insects, the exoskeleton included, were mixed with a solution of 2 g of ascorbic acid in 1200 ml of demineralized water, which is about a 0.01M solution. The formation of a separate lipid phase was observed. The insect suspension was sieved, and subjected to centrifugation to yield three fractions : a supernatant, a residue and a pellet. Each of the fractions was freeze dried and further analysed with respect to the molecular weight distribution of the protein fractions using gel electrophoresis, and with respect to their foaming and gel formation properties as parameters representative for the protein functionality. Fat extraction was carried out using hexane. From the amount added it can be inferred that ascorbic acid was added as an anti-oxidant, and that the amount added was insufficient to enhance phase separation between proteins and lipids.

US4455302 discloses a process for producing a medial protein hydrolysate, comprising the soluble polypeptides of immature animal protein. According to that process, the raw material is washed and comminuted, and contacted overnight with a diluted acetic acid solution at a temperature of 70-90F (21-32°C), while stirring. Thereafter, a second acetic acid solution is produced with a pH of 3.6-6.5 and the raw material is heated therein to a temperature of 130-140F (54-60°C) for 30-40 minutes. The solubilized mixture is decanted, sent through a centrifuge to remove most of the fat and particulate matter. The protein phase is again heated to 100-120F so that it can be pumped. Thereafter, the solution may be spray dried to produce dry protein powder for wound healing.

According to US20110020864 lactic acid and organic acids may be used as swelling agents for collagen extraction, which implies the extraction of a functional protein and thus minimal hydrolysis.

Ullah et al., 2010 discloses the use of HCl as a strong acid at high concentration to facilitate phase separation of lipids from the remaining biomass, mainly for analytical purposes. The separation is facilitated by denaturation of the proteins to eliminate their emulsifying properties.

US3.941.764 discloses a process for preparing protein and oil from oilseeds, according to which 1 g of comminuted oilseeds is mixed with 3 to 12 ml of a mixture of hexane and acetic acid at room temperature and stirred for 2-4 minutes, thereby forming a suspension of marc in an oil-containing monophasic miscella and separating the miscella from the marc to obtain the proteinaceous marc and the oil containing miscella. The contact with hexane however causes denaturation of the proteins.

EP0848911 discloses a process for recovering muscle proteins from an animal source, according to which fish or meat muscle tissue is ground and washed with sufficient water, after which the insoluble fraction is pulverized with water and citric acid to form a homogeneous suspension of small particles in an aqueous solution with a pH of between 5.3 and 5.5. In the subsequent step the pH is further reduced and the thus treated muscle tissue is mixed with an aqueous liquid at a pH of below 3.5, in a ratio of volume of aqueous liquid to the weight of tissue of at least 7:1. This further pH reduction serves the purpose of dissolving the protein component in the aqueous liquid, while avoiding gelation of the composition. In order to keep the majority of the proteins in solution, the solution temperature and the time the protein is in solution should be reduced, in particular when the pH of the protein solution reaches a lower pH of 2.0 or lower. The majority of the proteins is said to remain in solution, whereas lipids, fats, oils, bone, skin, membrane tissue and the like form an insoluble or separate phase which can easily be separated from the low pH aqueous protein solution to be discarded. The process disclosed by EP0849911 does therefore not seek to recover or maximize the isolated lipid fraction of the muscle tissue.

None of the prior art publications discloses a treatment for biomass with which a simultaneous extraction and isolation of a lipid fraction and a protein fraction may be obtained, in such a way that the lipid fraction on the one hand and the protein fraction on the other hand are suitable for higher valorization later on.

The present invention therefore seeks to provide a method which permits to simultaneously isolate from a biomass, a lipid fraction and a protein fraction which are suitable for further valorization, without requiring a treatment of the biomass with an organic solvent that needs to be removed to render the lipid fraction or the protein fraction or a part thereof or both, suitable for further use.

This is achieved according to the present invention with a method showing the technical features of the characterizing portion of the first claim.

Thereto, the present invention relates to a method for simultaneously recovering in aqueous medium, from a lipid and protein containing biomass, of a lipid fraction and a protein fraction, wherein the method comprises a refining step to extract the lipid and protein fraction from the biomass. The method of this invention is characterised in that the refining step consists of contacting the biomass with a solution of at least one organic acid in water having a pH of between 1 and 6, and in that the method further comprises subjecting the thus treated biomass to a phase separation and recovering from that phase separation a first lipid phase containing at least 65 % with respect to the total weight of the lipids contained in the biomass and a second protein phase containing dissolved proteins in the supernatant, one or more precipitated proteins and/or insoluble material.

The inventors have observed that contacting the biomass with a solution of at least one organic acid in water, wherein the solution has a pH of between 1 and 6, a quantitative extraction of the proteins and lipids contained in the biomass may be obtained, within a relatively short time. It has namely been observed that the contacting of the biomass with the aqueous organic acid solution suffices to achieve almost instantaneous release of both the lipids and proteins from the biomass, and that further mixing or stirring for dedicated periods of time may be dispensed with. Thereby during phase separation, at least a first fraction is formed, which will usually contain the extracted lipids in a separate phase. This first fraction may either take the form of a liquid phase, a high viscous phase or a solid phase depending on the temperature. This first fraction forms a separate phase with respect to a second fraction of a second liquid phase and may easily be separated therefrom. The second fraction will usually contain a liquid phase of the supernatant, with the remainders of dissolved organic acid, and possible other dissolved materials contained in the biomass, amongst which part of the proteins contained in the biomass. Furthermore, a third phase is formed which will usually settle at the bottom, which contains one or more precipitated proteins. The protein and lipid fractions may be separated from each other using any technique considered suitable by the skilled person, for example by settling or centrifugation, but any other suitable technique may be used as well. The lipid fraction will usually form the upper phase of the organic acid treated biomass, whereas the protein containing fraction will usually form the lower phase of the organic acid treated biomass.

The method of the present invention presents the advantage that in comparison to prior art methods, the present invention permits to isolate or recover from the biomass, a larger part of the lipids than hitherto could be achieved without the use of organic solvents such as hexane. In particular, the lipid fraction contains at least 65 % often at least 70 % of the total amount of lipid present in the biomass on weight basis, preferably at least 72.5 %, more preferably at least 75 %, often at least 80 % or even more. In particular cases an extraction of at least 90 % of the lipids contained in the biomass could be extracted, and even at least 95 %, on weight basis. Thereby, the lipids may be obtained in high purity, often of 85 % or more. The present invention permits achieving extraction of the lipids in high yield as described above, and additionally the method of this invention permits obtaining the lipids in high purity. In particular it has been found the lipid fraction has a purity in lipids of at least 70.0 % based on the weight of the lipid fraction, preferably at least 75.0 wt. %.

The present invention additionally permits achieving that in comparison to prior art methods, a larger fraction of the proteins may be recovered from the biomass than hitherto could be achieved, with the proteins maintaining their functionality, In particular the second protein fraction contains at least 25 %, of the total amount of proteins present in the biomass, preferably at least 30 %, on weight basis. To achieve this, it may be desirable to subject the proteins dissolved in the second liquid phase to a further treatment to cause precipitation of the proteins. The second phase obtained when subjecting the biomass to the treatment with organic acid as described above, will usually contain proteins in a precipitated state and a liquid phase containing one or more proteins in a dissolved state.

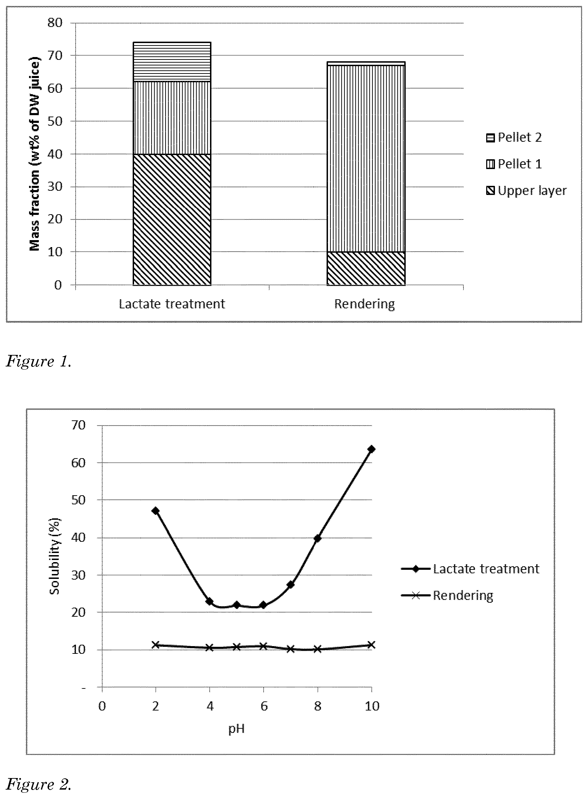

It has further been found that with this invention the risk to denaturation of the one or more proteins that is extracted from the biomass, may be reduced to a minimum and that moreover the proteins may maintain their functionality. This may be observed from figure 2, showing that at least 20 % of the proteins based on the total weight of the proteins contained in the biomass, may be extracted using the aqueous solution having a pH of between about 4 and 6, at least 25 % at a pH of 7, at least 40% at a pH of 8, at least 60 % at a pH of 10, at least 45% at a pH of 2. When compared to rendering as a protein extraction method, denatured proteins originating from rendering only dissolve for 10% over the entire pH range. Thereby, a protein fraction may b obtained of which at least 20 wt. % of the proteins with respect to the total weight of the proteins are soluble in an aqueous solution having a pH of between about 4 and 6 ; wherein at least 25 wt. % of the proteins with respect to the total weight of the proteins are soluble in an aqueous solution having a pH of 7, wherein at least 40,wt. % of the proteins are soluble in an aqueous solution having a pH of 8, wherein at least 60 wt. % of the proteins are soluble in an aqueous solution having a pH of 10, and at least 45 wt. % of the proteins are soluble in an aqueous solution having a pH of 2.

The amount of the aqueous solution of the organic acid that is added to the biomass may vary within wide ranges, and the skilled person is capable of selecting that amount added in such a way that isolation of the lipids present in the biomass from proteins present in the biomass may be maximized. When using lactic acid as the organic acid, in a concentration of below 0.1 M, hardly any phase separation and/or lipid and/or protein extraction from the biomass could be obtained. Although the addition of some excess of organic acid can be tolerated and in general will not adversely affect the structure and functionality of the proteins, a too large excess of organic acid risks to compromise the economic feasibility of the process. Therefore, the ratio of the volume of the aqueous organic acid to the weight of the biomass is at least 3.0, preferably at least 5.0, more preferably at least 6.0, most preferably at least 10.0 or even at least 11.0. For practical reasons too large volumes of aqueous organic acid are to be avoided, ant therefore the ratio of the volume of the aqueous organic acid to the weight of the biomass is maximum 15, although it may be lower as well.

Although the addition of at least one organic acid will generally cause precipitation of at least part of the proteins, proteins having a divergent isoelectric point may remain dissolved in the liquid aqueous supernatant. Isolation or recovering of these proteins, and increase of the process yield, may however be achieved using the techniques well known to the skilled person to achieve protein precipitation, for example by changing the pH to a value which corresponds to the iso-electric point of the protein, but other techniques may be used as well.

The risk that the functionality of the at least one protein is affected may be minimized by the use of a weak organic acid with a pKa of between 1.0 and 6.0, preferably a pKa of between 1.5 and 6.0, more preferably a pKa of between 2.0 and 6.0, or a pKa of between 2.5 and 6.0, in particular a pKa between 2.5 and 5.0, preferably between 2.5 and 4.5. more particularly between 3.25 and 4.5.

The aqueous solution of the at least one organic acid has a pH of between 1.0 and 6.0, preferably between 1.5 and 6.0, more preferably between 2.0 and 6.0, most preferably between 2.5 and 6.0, in particular between 2.5 and 5.0, preferably between 2.5 and 4.5. more particularly between 3.25 and 4.5. Contacting of the biomass with the aqueous solution of the at least one organic acid may cause the pH of the aqueous solution of the organic acid to raise, so that a liquid mixture of the biomass and the aqueous solution of the organic acid is obtained with a pH of between 3.0 and 6.0, preferably between 3.3 and 5.0.

The at least one organic acid is lactic acid or citric acid. Depending on the nature of the proteins to be extracted, a mixture of two or more organic acids may be used to favor precipitation of a wide variety of proteins, or favor a selective precipitation of a selected group of proteins only. The composition of the organic acid mixture may be tuned by the skilled person taking into account the nature of the lipids and proteins to be extracted from the biomass and separated from each other, by varying the nature of the organic acids contained in the mixture and the concentration of each of the organic acids in the composition.

The temperature at which the method of this invention is carried out, in particular the temperature at which the biomass is contacted with a solution of at least one organic acid, and the temperature at which any other treatments according to preferred embodiments of this invention are carried out, is preferably selected in such a way that there is a minimal risk to adversely affect the structure and functionality of the proteins contained in the biomass and a minimal risk to oxidation or hydrolysis of the lipids. On the other hand, the temperature may be selected to take into account the nature of the fats contained in the biomass. Thereby it is preferably selected such that the majority of the fats contained in the biomass are in a fluid state. Therefore, the higher the concentration of unsaturated fats, the lower the treatment temperature may be. To that end, the temperature of the biomass is preferably maintained at a temperature between 0 and 50°C, in particular between 5 and 40°C, more preferably between 10 and 30°C, most preferably between 20 and 25°C or room temperature.

To achieve maximal extraction of the proteins contained in the biomass, the concentration of the organic acid in the solvent is at least 0.25 mole/1, in particular at least 0.30 mole/1, more in particular at least 0.40 mole/1 or at least 0.50 mole/1. Below 0.25 mole/1 hardly any effect had been observed with lactic acid. The lower and upper limit may vary depending on the nature of the organic acid and it may be determined by the pKa of the organic acid and the type of biomass. Although an excess of organic acid may be used, the excess is preferably kept within desired limits, not only to minimize the risk that the pH of the solution would be too low but also from the point of view of process costs and minimizing the costs for an additional purification step to remove the organic acid. The optimal organic acid concentration may depend on the nature of the organic acid used, and the nature and concentration of the proteins and lipids present in the biomass, and may be easily adapted accordingly by the skilled person.

In order to ensure maximal recovery of the proteins contained in the biomass, the biomass may be subjected to a mechanic disruption treatment in advance of being contacted with the organic acid. The purpose of the mechanic disruption treatment is manifold and it may a.o. serve to disrupt the exoskeleton of organisms contained in the biomass to release the content of the organisms so that at least the proteins and lipids contained therein are available to be treated according to the invention, or to reduce the size of the biomass particles. A wide variety of mechanic treatments known to the skilled person may be used, for example crushing, mashing, milling, grinding, pulverizing etc. The thus mechanically treated biomass may be separated into a fluid mass or juice and a solid phase containing any exoskeletons, fibers or solid material of the biomass. Or in other words, the thus mechanically treated biomass will preferably be separated into a fraction containing the lipids and proteins and a solid phase containing slightly soluble or insoluble polysaccharides, for example fibers or parts of the exoskeleton. The mechanic treatment is preferably carried out in such a way that the risk to denaturation of proteins or the risk to oxidation or hydrolysis of lipids contained in the biomass may be reduced to a minimum. Thereto, the mechanic treatment is preferably carried out in such a way that shear forces are reduced to a minimum, and that heating of the biomass above a desired temperature is reduced to a minimum.

Depending on the nature of the biomass, a mechanical treatment may also serve to achieve disruption of the cell walls of the biomass and cause the functional compounds contained in the cells to be released.

The thus mechanically treated biomass may thereafter be separated into a first mass containing the lipid and protein fraction, which first mass is to be treated with the organic acid, and a solid residue. The solid residue will often contain insoluble or slightly soluble polysaccharides. Within the scope of this invention it is however also possible to subject the mechanically treated biomass in its entirety to a fractionation treatment with at least one organic acid, especially in case the solid phase contains a too high concentration of desired components, thereby dispensing with the separation of the polysaccharide solid residue.

Preferably, any solid residue or any solid particles contained in the mechanically treated biomass is separated from the fluid phase, to minimize contamination of the fluid phase with non-protein compounds and permit proteins to be isolated with the best possible purity. Separation of the solid residue may be achieved by many techniques known to the skilled person, such as sieving, centrifugation, filtering and any other suitable technique. Where the biomass is obtained from insects or other organisms with an exoskeleton, the solid residue will usually contain chitin. In many applications for proteins, the presence of chitin is unwanted.

When a biomass is treated with an organic acid as described by the present invention, a second liquid phase may be formed, which will generally contain the organic acid and may also contain one or more proteins either in a precipitated or in a dissolved state. If maximum recovery of all proteins is envisaged, this second liquid phase which contains the at least one organic acid and which is formed when contacting the biomass with the organic acid, may be subjected to a separate procedure to recover proteins dissolved therein. Recovering of the dissolved proteins, for example by precipitation, may be achieved using the methods generally known to the skilled person, for example using salting out, isoelectric precipitation, membrane separation, etc.

The method of this invention is suitable for use with a wide variety of biomasses which may be of animal, vegetal, bacterial or fungal origin or a mixture of two or more hereof. Suitable biomasses of animal origin include insects, fish, poultry parts, mammalian animal parts, etc. Suitable biomasses of vegetal origin include algae, soybeans, peas, chickpeas, beans, sprouts, mushrooms, various seeds such as sesame, line seed, chia seed, sunflower seed, etc, cereals, banana's, avocado, etc. Suitable biomasses of fungal origin include fungi and yeasts. However, a mixture containing two or more of the afore mentioned biomasses may be used in the method of this invention as well. Living biomass may be used as well as dead biomass or a mixture thereof. The method of this invention is suitable for use with wet biomass, i.e. biomass containing biomass fluid, as well as for use with biomass that has been subjected to drying or dehydration, for example freeze drying. Preferably the drying is carried out in such a way that adversely affecting of the chemical composition, structure and functionality of the lipids and proteins contained in the biomass is reduced to a minimum. Thereto, the biomass may be partly dehydrated or dried or be fully dehydrated or dried. When using dried or dehydrated biomass as the starting product, although it is not required by the process of this invention, the biomass may be at least partly re-hydrated before being subjected to the method of this invention.

The present invention presents the advantage that a mild separation technique is provided for separating lipids and proteins, which may be carried out at room temperature and does not require the use of organic solvents like hexane. The method of this invention permits to maintain the functionality of the proteins and to minimise the risk to denaturation of the proteins contained in the biomass. As a result, the proteins obtained with the method of this invention may be used in a wide variety of applications, for their nutritional value which is extremely useful for food and feed based on their amino acid composition, but also important technical functionalities (foaming, gelling properties, emulsification, etc...), which make them extremely useful as food ingredient or for the chemical industry. Other properties of proteins, in particular their bioactivity, for example their antimicrobial activity, in particular their ability to reduce the need to use of antibiotics in feed, their antihypertensive properties, their antioxidant properties etc... may be important as well in certain applications envisaged.

Fractionation of lipids and proteins from biomass without loss of functionality of the proteins is the key advantage that may be achieved with the technology of the present invention. Functional proteins obtained with the method of this invention are suitable to be used in a wide range of applications, for example in food, feed and chemical industry. There is also described the use of the functional proteins obtained with the method of this invention in human food, animal feed and other chemical applications. There is also described human food containing one or more proteins obtained with the method of this invention and animal feed containing one or more proteins obtained with the method of this invention. Further described is a food or a feed composition containing a protein fraction, a lipid fraction or a mixture of a protein and a lipid fraction obtained with the method of this invention as described above. Beside the food and feed industry, the proteins that may be extracted with the method of this invention can also have industrial applications : for example they are suitable for use in edible films and coating with proteins that have film forming and emulsifying properties. Microcapsules containing proteins obtained with the method of this invention find applications in pharmaceutical industry as controlled drug release devices, for therapy and for immobilizing other macromolecules. Therefore, there is also described a controlled release formulation containing one or more functional proteins obtained with the method of this invention. Further described is a cosmetic formulation comprising one or more lipids and/or one or more functional proteins obtained with the method of this invention. Proteins obtained with the method of this invention additionally find application in adhesives in the wood industry, and other technical applications. They are also useful ingredients for cosmetic products for hair and skin treatment or care. Furthermore, lipids are used in food and feed as nutritional components, but also in the oleochemistry, for example in surfactants.

The present invention is further elucidated in the examples below.
Figure 1 shows the mass fractions of an upper layer and a first and second pellet obtained when subjecting fresh crushed larvae of example 1 either to rendering or to the treatment of the present invention.
Figure 2 shows the solubility of the protein fraction contained in the protein pellet 1 recovered from the larvae juice after lactate treatment and rendering as a function of the pH of the solution.
Figure 3 gives an overview of the mass distribution of the different fractions with distribution of biomolecules (proteins and fats) when treating insect juice with different organic acids according to the invention and HCl.
Figure 4 shows a scheme according to which biomass or more specific insect larvae or insects in general may be treated according to the present invention, in particular treatment of the larvae juice only (option 1), treatment of a mixture of the pellet containing the exoskeleton of the larvae and the larvae juice (option 2), and separate treatment of the larvae juice and the pellet containing the exoskeleton of the larvae (option 3).
Figure 5 shows the dry weight percentages of fractions after centrifugation of several lactate tests on defrosted, crushed wet insect larvae. In the different tests, the temperature and solid:liquid ratio was varied as described in example 2.

### Example 1.

Fresh larvae were mechanically pretreated to a larvae juice and a chitin rich fraction.

The larvae juice was mixed in a recipient with an aqueous solution of lactic acid 0.5 M and a pH of 1.8. The liquid to dry solid ratio was 13.5 on weight basis. The mixture was shaken at room temperature (21 °C) for 30 minutes on a horizontal shaker, at a rotation speed of 200 rpm. Thereafter phase separation was performed by subjecting the mixture to centrifugation (e.g. 4000 g during 30 minutes) or to settling. As a result of the phase separation three layers were formed :
1. An upper layer which mostly contained lipids,
2. followed by a layer of supernatant containing amongst others dissolved proteins.
3. The layer most below contained precipitated proteins, and will be referred to as pellet 1.

The results of the pellets and upper layer given below were determined gravimetrically and based on dry weight of the upper layer and the dried proteins.

The upper layer was recovered by pipetting and was dried at 105 °C for 48h. The lipid extraction yield was determined gravimetrically.

The protein pellet (pellet 1) was freeze-dried until stable weight and the extraction yield was determined gravimetrically.

The dissolved proteins in solution in the second layer were recovered by pH precipitation with NaOH 1 M at pH 4.5 at 4 °C and centrifugation at 4000 g during 15 minutes. The precipitated proteins (pellet 2) were freeze-dried until stable weight and the extraction yield was determined gravimetrically.

The protein and lipid composition of the different fractions is shown in Table 1. As can be seen from table 1, the upper layer counted for 40 wt. % of the insect juice dry weight. The pellet 1 fraction was 22 wt.% of the insect juice dry weight, whereas the pellet 2 fraction was 12 wt.%. The upper layer contained 92 wt.% lipids with respect to the weight of the upper layer. The pellet fractions contained 32 to 38 wt.% lipids with respect to the weight of the pellet fractions.

The proteins contained in the pellet 1 fraction showed the lowest solubility (22-23 % with respect to the total protein weight of pellet 1) at pH 4-6 and the highest solubility of 63 % (with respect to the total protein weight of pellet 1) on weight basis at a pH of 10.

### Example 2.

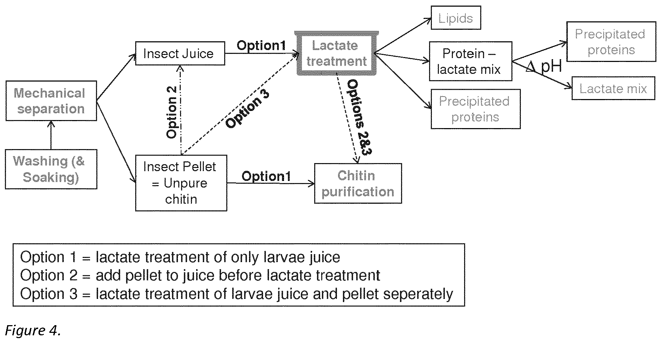

Defrosted, crushed, wet larvae referred to as 'Option 2' in 4 were treated with 0.5 M lactate during 1 hour at room temperature, at a liquid to dry solid ratio of respectively 3 and 11. After centrifuging for 15 minutes, 4 layers were formed, as follows :
1. An upper layer (1), which mostly contained lipids,
2. a second layer of supernatant (2) with dissolved proteins. These dissolved proteins were not precipitated in an after-treatment by changing the pH as described in Figure 4 to obtain 'pellet 2'. The 'pellet 2' proteins are therefore a part of the supernatant proteins in these tests.
3. The layer (3) underneath the second layer contained precipitated proteins (cfr. pellet 1),
4. and the bottom layer (4) contained the exoskeleton pellet.

The weight of the above-mentioned pellets and upper layer were gravimetrically and based on dry weight without biochemical analysis of the fractions. The mass of supernatant proteins was determined via total N analysis of the supernatant. The lipid fraction and both pellets were washed before drying and weighing to remove any remaining lactate and other water soluble compounds. The sum of all fractions represents the mass balance, which is below 100% due to the washing procedure and because the amount of carbohydrates and minerals present in the fractions was not measured.

This example aimed at reducing the amount of liquid, increasing the mass and purity of the upper lipid containing layer and decrease the mass of the exoskeleton pellet. This experiment also aimed at increasing the mass of pellet 1 which contained the precipitated proteins.

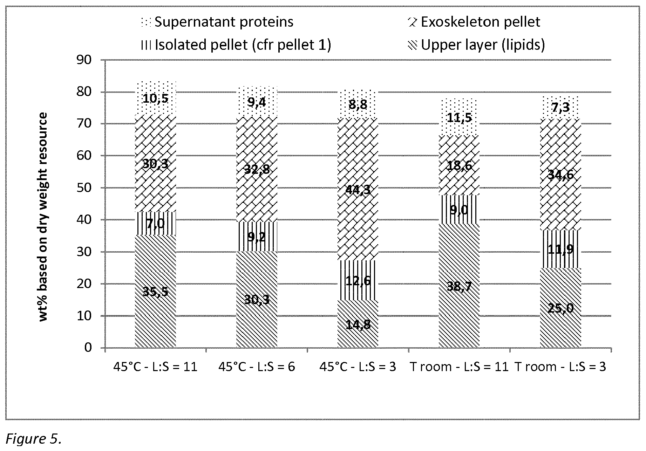

The results show that room temperature is a temperature which is sufficiently high to permit isolating the lipids, cleaning the exoskeleton pellet and achieving precipitation of proteins. From the results given in figure 5 it can be observed that by increasing the amount of solvent added and thus by increasing the liquid:solid ratio from 3 to 11, the separation of the afore-mentioned compounds may be improved.

When increasing the temperature to above room temperature, in this example 45°C, a "dirty" pellet was obtained, probably due to denaturation of proteins that clog onto the exoskeletons.

As can be seen from figure 5, optimal results in terms of the amount of lipid and proteins that could be isolated, was obtained at room temperature and a liquid over solid ratio of 11.

### Comparative experiment A.

The set-up of example 1 was used, with the difference that larvae juice was mixed with water only, without addition of the organic acid, and shaken at 200 rpm at 100 °C during 18 hours to simulate rendering on laboratory scale. The results are shown in Figure 1.

The protein and lipid composition of the different fractions is shown in Table 1. The results of table 1 are visualized in fig. 1.

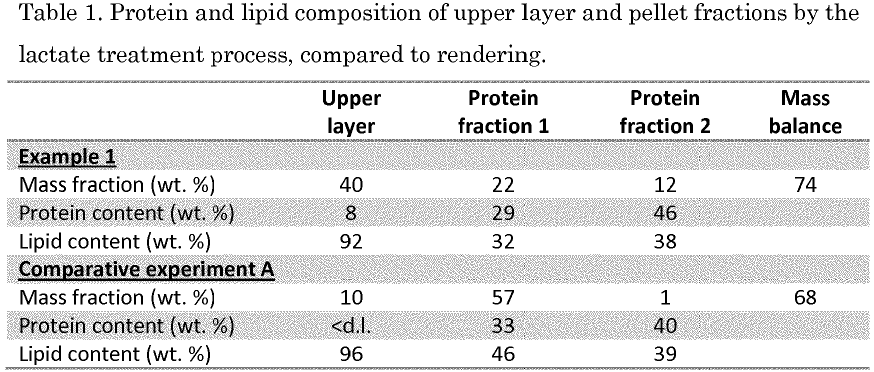

The upper layer, obtained by rendering, was 10 % of the insect juice dry weight, compared to an upper layer consisting of 40 wt. % when subjecting the biomass to the treatment with lactic acid. Hydrolysis of the lipid phase into fatty acids is probably causing the reduced yield of the upper lipid layer. The pellet 1 fraction, obtained by rendering was 57 wt. % with respect to the weight of the biomass. The pellet 2 fraction obtained using rendering was 1wt. % with respect to the weight of the biomass. The upper layer contained 96% lipids. The pellet fractions contained 39 to 46 wt. % of lipids with respect to the weight of the respective pellet fractions.

The weight of pellet fraction 2 was low when compared to Example 1, indicating a low content of water-soluble proteins in pellet fraction 2, probably due to denaturation of proteins in the course of the temperature treatment at 100°C. This hypothesis was further explored by measurement of the water solubility of the different protein fractions as is shown in Figure 2.

The solubility of the pellet fraction 1 was 10-11wt. % with respect to the weight of pellet fraction 1 in a pH range between 2 and 10.

From the comparison of Comparative experiment A and Example 1, it can be concluded that extraction of proteins using rendering gave rise to a pellet fraction 1 with lower water solubility when compared to example 1, indicating denaturing of the proteins with loss of functionality in comparative experiment A.

### Comparative Experiment B.

Similar to example 2, defrosted, crushed, wet larvae referred to as 'Option 2' in Figure were treated with HCl at pH 2 during 1 hour. The pH was the same as in example 2. A liquid : solid ratio was used of respectively 3, 6 and 11 and the experiment was carried out at 45°C. A liquid : solid ratio was used of respectively 3 and 11 and the experiment was carried out at room temperature. In none of these experiments a lipid layer was formed, thus extraction of lipids from the biomass with HCl could not be achieved. The same experiment was repeated with insect juice instead of whole crushed larvae and described in the next paragraph (HCl at pH2) since a small upper lipid layer was formed with only the insect juice as resource, thus without the chitin fraction.

### Example 3 - 6 : Effect of the nature of the organic acid

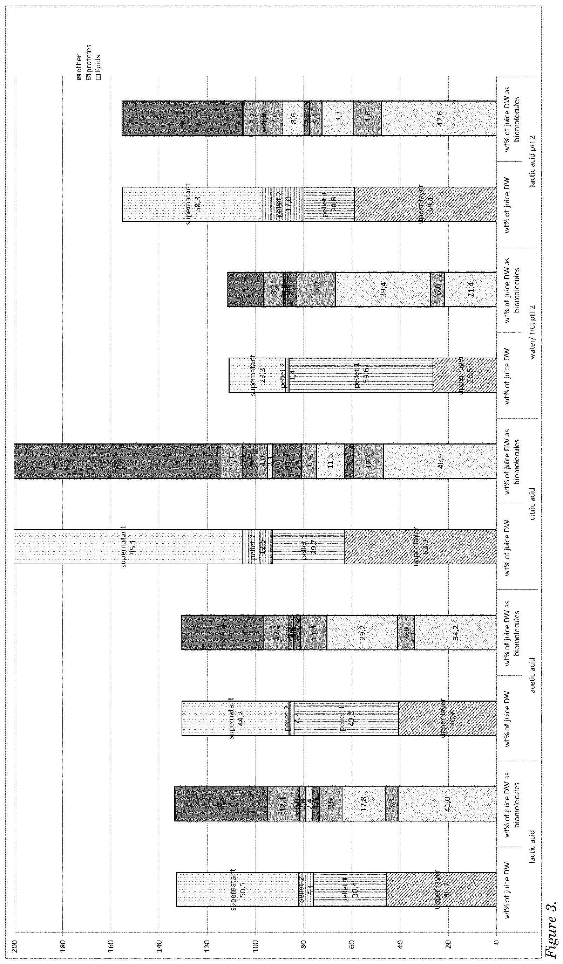

An insect juice was prepared as described in Example 1 and subjected to fractionation by treatment of the juice at room temperature with lactic acid (example 3), acetic acid (example 4), citric acid (example 5). Additionally, an experiment was conducted with lactic acid where the pH was also kept at 2 by addition of HCl (example 6). The results are shown in figure 3 and table 2.

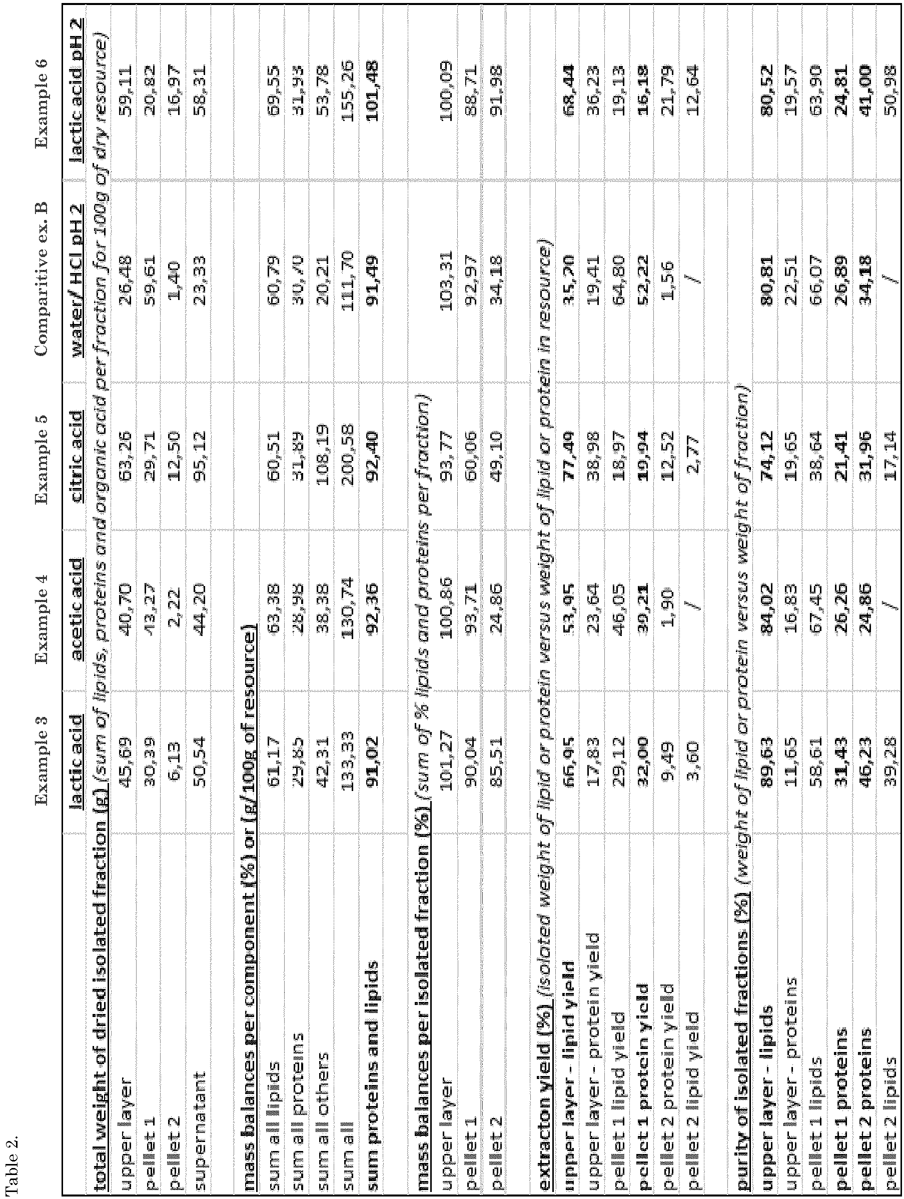

The purity of the components contained in each fraction was determined by analysis of proteins and lipids. The rest ('other') was calculated by subtraction of proteins and lipids. For example, the upper layer which constituted 59 wt. % of the biomasss was divided over 48 % lipids and 12 % proteins on weight basis. The sum of all dry weight fractions was higher than 100 due to contribution the dry weight of the organic acids added to induce fractionation. Table 2 also shows the mass balances where 'other' were taken out of the calculations. This also allowed the calculation of products yields and purity of lipids or proteins in the isolated fractions.

The data shown in figure 3 and table 2 indicate that, with all treatments, the weight of the upper layer varied, and the upper layer contained a relatively pure lipid fraction. However, proteins are found in all fractions (upper layer, pellet 1, pellet 2 and supernatant). The nature and amount of protein contained in a certain fraction, depends on water solubility of the proteins, precipitation behavior of the proteins and protein interaction with lipids.

The overall goal of the treatment is to maximize the yield and purity of lipids in the upper layer and maximize the yield and purity of proteins in pellet 1.

Additionally, pellet 2 can increase the amount or yield of isolated proteins.

In table 2 it is seen that the maximum yield of lipids (in wt. % of lipid fraction with respect to the weight of the biomass) in the upper layer was obtained with citric acid (77.49%), followed by lactic acid at pH 2 (68.44%) and lactic acid as such (66.95%). The purity of lipids in the upper layer, however, was the highest with lactic acid as such (89.63%) while citric acid showed a significant lower purity (74.12%). The purity of the upper layer from the lactic acid treatment at pH 2 was intermediate (80.52%)

Another discriminator to evaluate the performance of the different acid treatments is the extraction yield and purity of proteins in pellet 1. The highest protein yield (in wt. % with respect to the weight of the biomass) was obtained with HCl at pH2 (52.22 wt. %), however, since the lipid yield was insufficient (35.20 wt.%) and protein denaturation might have caused the high protein yield, this treatment can be dismissed. The second highest protein yield was obtained with acetic acid (39.21%), followed by lactic acid as such (32.00 wt. %). The purity of proteins in the lactic acid pellet 1 on weight basis was higher than with acetic acid (31.43 % *versus* 26.26 %). The yield of lipids, however, was lower for acetic acid *versus* lactic acid (53.95 wt. % *versus* 66.95 wt.%), concluding that overall the lactic acid treatment is superior. Since citric acid and lactic acid at pH 2 obtained the highest lipid yields, the protein yields and purities are evaluated. Pellet 1 obtained with the citric acid treatment only yielded 19.94 wt. % of proteins with a protein purity of only 21.41%. Pellet 1 of the lactic acid treatment at pH only yielded 16.18 wt. % of proteins with a protein purity of 24.81%. These values are inferior to the protein yield and purity obtained with the lactic acid treatment (resp. 32.00 wt. % and 31.43%).

Based on all observations and goals, *i*.*e*. maximized yield and purity of proteins and lipids respectively in pellet 1 and the upper layer, the treatment with lactic acid is superior to all other treatments.

### Example 7. Extraction of lipids and proteins from minced meat, by treatment with lactic acid.

Minced meat, as alternative resource, was subjected to fractionation by treatment with lactic acid according to the method described in example 1. The results of the treatment of minced meat with lactic acid are shown in table 3. The yield of the upper layer lipids was low compared to example 1 while the purity of lipids was higher. Apparently, separation of lipids was less effective with this resource since many lipids are present in both pellets. Additionally, the yield and purity of proteins in pellet 1 were higher with minced meat compared to example 1. This examples shows that the treatment must be fine-tuned according to the resource to be fractionated.

**Table 3 Treatment of minced meat with lactic acid**

| | **lactic acid** | | | | | |
|---|---|---|---|---|---|---|
| **total weight of dried isolated fraction (g)** *(sum of lipids, proteins and organic acid per fraction for 100g of dry resource)* | | | | | | |
| upper layer | 22,25 | | | | | |
| pellet 1 | 46,72 | | | | | |
| pellet 2 | 32,72 | | | | | |
| supernatant | 27,83 | | | | | |
| | | | | | | |

| mass balances per component (%) or (g/100g of resource) | | | | | | |
|---|---|---|---|---|---|---|
| sum all lipids | 57,33 | | | | | |
| sum all proteins | 38,09 | | | | | |
| sum all others | 34,09 | | | | | |
| sum all | 129,52 | | | | | |
| **sum proteins and lipids** | 95,43 | | | | | |
| | | | | | | |

| **mass balances per isolated fraction (%)** *(sum of % lipids and proteins per fraction)* | | | | | | |
|---|---|---|---|---|---|---|
| upper layer | 98,15 | | | | | |
| pellet 1 | 86,84 | | | | | |
| pellet 2 | 91,62 | | | | | |
| | | | | | | |

| *protein versus weight of lipid or protein in resource)* **extracton yield** (%) *(isolated wei ight of lipid or* | | | | | | |
|---|---|---|---|---|---|---|
| **upper layer** - **lipid yield** | 36,38 | | | | | |
| upper layer- protein yield | 2,57 | | | | | |
| pellet 1 lipid yield | 33,83 | | | | | |
| **pellet 1 protein yield** | 55,58 | | | | | |
| pellet 2 protein yield | 33,86 | | | | | |
| pellet 2 lipid yield | 29,79 | | | | | |
| | | | | | | |

| **purity of isolated fractions** (%)( *weight of lipid or protein versus weight of fraction)* | | | | | | |
|---|---|---|---|---|---|---|
| **upper layer - lipids** | 93,75 | | | | | |
| upper layer- proteins | 4,40 | | | | | |
| pellet 1 lipids | 41,51 | | | | | |
| **pellet 1 proteins** | 45,32 | | | | | |
| **pellet 2 proteins** | 39,42 | | | | | |
| pellet 2 lipids | 52,20 | | | | | |

### References.

- Herrera, EP2455445 (B1), Obtaining fatty acids from insect larvae, 2012
- Hu et al., CN101880593 (A), Application of black soldier fly larvae as oil-crop insect, 2010
- Huang, US20110020864, Preparation of high purity collagen, 2011
- Kroeckel et al., 2012, When a turbot catches a fly: Evaluation of a pre-pupae meal of the Black Soldier Fly (Hermetia illucens) as fish meal substitute — Growth performance and chitin degradation in juvenile turbot (Psetta maxima), Aquaculture 364-365 (2012) 345-352
- Robertson, US4455302, Medical protein hydrolysate, process of making the same and processes of utilizing the protein hydrolysate to aid in healing traumatized areas, 1984
- Tzompa-Soza et al., Insect lipid profile: aqueous versus organic solvent-based extraction methods, Food Research International 62 (2014) 1087-1094
- Ullah et al., Improved extraction and analysis of lipids after acid and base hydrolysis, 2010, Dionex communication
- Verhé et al., Industrial products from lipids and proteins (2004) p208-250. In: Renewable Bioresources: Scope and Modification for non-food applications (Stevens & Verhé, eds), John Wiley & Sons
- Yi et al., Extraction and characterization of protein fractions from five insect species, Food Chemistry (2013) 141 (4) 3341-3348
- Robertson, US4455302, Medical protein hydrolysate, process of making the same and processes of utilizing the protein hydrolysate to aid in healing traumatized areas, 1984
- Hensarling et al., US3941764, Use of acidic hexane to process oil seeds for protein and oil, 1974
- Hultin et al., EP0848911, Verfahren zur Isolierung einer Proteinzusammensetzung aus einem Muskelsubstrat und Proteinzusammensetzung, 1996

## Claims

1. A method for simultaneously recovering in aqueous medium, from a lipid and protein containing biomass, of a lipid fraction and a protein fraction, wherein the method comprises a refining step to extract the lipid and protein fraction from the biomass, **characterised in that** the refining step consists of contacting the biomass with a solution of at least one organic acid in water at a concentration of at least 0.25 mol/l, having a pH of between 1 and 6, wherein the at least one organic acid is lactic acid or citric acid, wherein the ratio of the weight of the aqueous organic acid solution to the dry weight of the biomass is between 3 to 15, and **in that** the method further comprises subjecting the thus treated biomass to a phase separation and recovering from that phase separation a first lipid phase containing at least 65 % with respect to the total weight of the lipids contained in the biomass and a second protein phase containing dissolved proteins in the supernatant, one or more precipitated proteins and/or insoluble material.

2. A method according to claim 1, wherein the refining step is carried out at a temperature between 10 and 40°C, most preferably between 20 and 30°C.

3. A method according to any of the previous claims, wherein the second phase of precipitated proteins comprises at least 25 % of the proteins with respect to the total weight of the proteins contained in the biomass, preferably at least 30.0 wt. %.

4. A method according to any one of the previous claims, wherein the lipid fraction has a purity in lipids of at least 70.0 % based on the weight of the lipid fraction, preferably at least 75.0 wt. %.

5. A method according to any one of the previous claims, wherein the organic acid that is lactic acid or citric acid is at a concentration of at least 0.30 mole/1, most preferably at least 0.40 mole/1, in particular at least 0.50 mole/l.

6. A method according to any of the previous claims, wherein in advance of being contacted with the organic acid, the biomass is subjected to a mechanic disruption treatment causing cell disruption of the biomass.

7. A method according to claim 6, wherein the thus mechanically treated biomass is separated into a fluid mass to be treated and a solid residue.

8. A method according to any of the previous claims, further comprising the step of recovering the first lipid phase, a layer comprising supernatant with proteins dissolved in the aqueous solution of the organic acid, and a lower layer comprising precipitated proteins.

9. A method according to any of the previous claims, further comprising the step of subjecting the mixture of the aqueous organic acid solution and biomass to mechanical separation, in particular centrifugation, and recovering the first lipid phase, a second layer of supernatant comprising proteins dissolved in the aqueous solution of the organic acid, a layer of precipitated proteins and/or a layer of insoluble material.

10. A method according to any of the previous claims, wherein the biomass is of animal, vegetal, bacterial or fungal origin, or a mixture of two or more of the afore mentioned biomasses.

11. A method according to any of the previous claims, wherein the biomass is subjected from one or more of or a mixture of two or more from the group comprising fresh biomass, partly dehydrated biomass, fully dehydrated biomass, or is a biomass which has been subjected to re-hydration in advance of being contacted with the solution of the at least one organic acid in water.

12. A method according to claim 11, wherein the biomass is one or more of, or a mixture of, partly dehydrated biomass or fully dehydrated biomass, and wherein said biomass is produced by freeze drying or a drying method at a temperature of maximum 60°C.

13. A method according to claim 11 or 12, wherein in advance of being contacted with the organic acid, the biomass is wetted with water or a solution of at least one organic acid in water.

## Patentansprüche

1. Verfahren zum gleichzeitigen Rückgewinnen in wässrigem Medium aus einer Lipid und Protein enthaltenden Biomasse einer Lipidfraktion und einer Proteinfraktion, wobei das Verfahren einen Raffinationsschritt umfasst, um die Lipid- und Proteinfraktion aus der Biomasse zu extrahieren, **dadurch gekennzeichnet, dass** der Raffinationsschritt aus dem Inkontaktbringen der Biomasse mit einer Lösung von wenigstens einer organischen Säure in Wasser mit einer Konzentration von wenigstens 0,25 mol/l, mit einem pH-Wert von zwischen 1 und 6, besteht, wobei die wenigstens eine organische Säure Milchsäure oder Zitronensäure ist, wobei das Verhältnis des Gewichts der wässrigen organischen Säurelösung zu dem Trockengewicht der Biomasse zwischen 3 bis 15 ist, und dadurch dass das Verfahren ferner Unterziehen der so behandelten Biomasse einer Phasentrennung und Rückgewinnen aus dieser Phasentrennung einer ersten Lipidphase, enthaltend wenigstens 65 % in Bezug auf das Gesamtgewicht der Lipide, enthalten in der Biomasse, und einer zweiten Proteinphase, enthaltend gelöste Proteine im Überstand, ein oder mehrere ausgefällte Proteine und/oder unlösliches Material, umfasst.

2. Verfahren nach Anspruch 1, wobei der Raffinationsschritt bei einer Temperatur zwischen 10 und 40°C, am meisten bevorzugt zwischen 20 und 30°C, durchgeführt wird.

3. Verfahren nach einem der vorhergehenden Ansprüche, wobei die zweite Phase der ausgefällten Proteine wenigstens 25 % der Proteine, in Bezug auf das Gesamtgewicht der Proteine, enthalten in der Biomasse, vorzugsweise wenigstens 30,0 Gew.-%, umfasst.

4. Verfahren nach einem der vorhergehenden Ansprüche, wobei die Lipidfraktion eine Reinheit an Lipiden von wenigstens 70,0 %, basierend auf dem Gewicht der Lipidfraktion, vorzugsweise wenigstens 75,0 Gew.-% hat.

5. Verfahren nach einem der vorhergehenden Ansprüche, wobei die organische Säure, Milchsäure oder Zitronensäure ist, in einer Konzentration von wenigstens 0,30 mol/l, am meisten bevorzugt wenigstens 0,40 mol/l, insbesondere wenigstens 0,50 mol/l, ist.

6. Verfahren nach einem der vorhergehenden Ansprüche, wobei vor dem Inkontaktbringen mit der organischen Säure die Biomasse einer mechanischen Aufschlussbehandlung, verursachend Zellaufschluss der Biomasse, unterzogen wird.

7. Verfahren nach Anspruch 6, wobei die so mechanisch behandelte Biomasse in eine zu behandelnde flüssige Masse und einen festen Rückstand getrennt wird.

8. Verfahren nach einem der vorhergehenden Ansprüche, ferner umfassend den Schritt des Rückgewinnens der ersten Lipidphase, einer Schicht, umfassend Überstand mit Proteinen, gelöst in der wässrigen Lösung der organischen Säure, und einer unteren Schicht, umfassend ausgefällte Proteine.

9. Verfahren nach einem der vorhergehenden Ansprüche, ferner umfassend den Schritt des Unterziehens des Gemisches aus der wässrigen organischen Säurelösung und Biomasse einer mechanischen Trennung, insbesondere Zentrifugation, und Rückgewinnen der ersten Lipidphase, einer zweiten Schicht von Überstand, umfassend Proteine, gelöst in der wässrigen Lösung der organischen Säure, einer Schicht von ausgefällten Proteinen und/oder einer Schicht von unlöslichem Material.

10. Verfahren nach einem der vorhergehenden Ansprüche, wobei die Biomasse tierischen, pflanzlichen, bakteriellen oder Pilz- Ursprungs, oder ein Gemisch aus zwei oder mehreren der vorgenannten Biomassen ist.

11. Verfahren nach einem der vorhergehenden Ansprüche, wobei die Biomasse aus einem oder mehreren von, oder einem Gemisch von zwei oder mehreren aus der Gruppe , umfassend frische Biomasse, teilweise dehydrierte Biomasse, vollständig dehydrierte Biomasse unterzogen wird, oder eine Biomasse ist, die einer Rehydratisierung unterzogen wurde, bevor sie mit der Lösung der wenigstens einen organischen Säure in Wasser in Kontakt gebracht wird.

12. Verfahren nach Anspruch 11, wobei die Biomasse eine oder mehr von, oder ein Gemisch von teilweise dehydrierter Biomasse oder vollständig dehydrierter Biomasse ist, und wobei die Biomasse durch Gefriertrocknen oder ein Trocknungsverfahren bei einer Temperatur von maximal 60°C hergestellt wird.

13. Verfahren nach Anspruch 11 oder 12, wobei die Biomasse vor dem Inkontaktbringen mit der organischen Säure mit Wasser oder einer Lösung von wenigstens einer organischen Säure in Wasser benetzt wird.

## Revendications

1. Procédé visant à récupérer simultanément, en milieu aqueux, à partir d'une biomasse contenant des lipides et des protéines, une fraction lipidique et une fraction protéique, lequel procédé comporte une étape de raffinage conçue pour extraire de la biomasse les fractions lipidique et protéique, **caractérisé en ce que** l'étape de raffinage consiste à mettre la biomasse en contact avec une solution d'au moins un acide organique dans de l'eau en une concentration d'au moins 0,25 mol/L, présentant un pH situé entre 1 et 6, ledit acide organique présent au nombre d'au moins un étant de l'acide lactique ou de l'acide citrique, et le rapport du poids de solution aqueuse d'acide(s) organique(s) au poids à sec de biomasse valant de 3 à 15, et **en ce que** le procédé comporte en outre le fait de soumettre la biomasse ainsi traitée à une séparation de phases et de récupérer, à l'issue de cette séparation de phases, une première phase lipidique contenant au moins 65 % en poids du total des lipides contenus dans la biomasse, et une deuxième phase protéique contenant des protéines dissoutes dans le surnageant, une ou plusieurs protéine(s) précipitée(s) et/ou des matières insolubles.

2. Procédé conforme à la revendication 1, dans lequel l'étape de raffinage est réalisée à une température située entre 10 et 40 °C, de préférence entre 20 et 30 °C.

3. Procédé conforme à l'une des revendications précédentes, dans lequel la deuxième phase de protéines précipitées comprend au moins 25 % en poids, de préférence au moins 30,0 % en poids, du total des protéines contenues dans la biomasse.

4. Procédé conforme à l'une des revendications précédentes, dans lequel la fraction lipidique présente une pureté en lipides d'au moins 70,0 %, de préférence d'au moins 75,0 %, en poids rapporté au poids de la fraction lipidique.

5. Procédé conforme à l'une des revendications précédentes, dans lequel l'acide organique, c'est-à-dire l'acide lactique ou l'acide citrique, se trouve en une concentration d'au moins 0,30 mol/L, de préférence d'au moins 0,40 mol/L, et en particulier d'au moins 0,50 mol/L.

6. Procédé conforme à l'une des revendications précédentes, dans lequel la biomasse, avant d'être mise en contact avec l'acide organique, est soumise à un traitement mécanique de rupture qui provoque la rupture des cellules de la biomasse.

7. Procédé conforme à la revendication 6, dans lequel la biomasse ainsi mécaniquement traitée est séparée en une masse liquide à traiter et un résidu solide.

8. Procédé conforme à l'une des revendications précédentes, qui comporte en outre une étape consistant à récupérer la première phase lipidique, une phase comprenant un surnageant avec des protéines dissoutes dans la solution aqueuse d'acide organique, et une phase inférieure comprenant des protéines précipitées

9. Procédé conforme à l'une des revendications précédentes, qui comporte en outre une étape consistant à soumettre le mélange de biomasse et de solution aqueuse d'acide organique à une séparation mécanique, en particulier une centrifugation, et à récupérer la première phase lipidique, une deuxième phase de surnageant comprenant des protéines dissoutes dans la solution aqueuse d'acide organique, une phase de protéines précipitées et/ou une phase de matières insolubles.

10. Procédé conforme à l'une des revendications précédentes, dans lequel la biomasse est d'origine animale, végétale, bactérienne ou fongique, ou est un mélange de deux biomasses de types mentionnés ci-dessus ou plus.

11. Procédé conforme à l'une des revendications précédentes, dans lequel la biomasse est choisie parmi un ou plusieurs éléments, ou est un mélange de deux ou plusieurs éléments, de l'ensemble comprenant une biomasse fraîche, une biomasse partiellement déshydratée et une biomasse complètement déshydratée, ou est une biomasse qui a subi une réhydratation avant d'être mise en contact avec la solution d'au moins un acide organique dans de l'eau.

12. Procédé conforme à la revendication 11, dans lequel la biomasse est l'une ou plusieurs, ou un mélange, d'une biomasse partiellement déshydratée et d'une biomasse complètement déshydratée, et dans lequel ladite biomasse est produite par lyophilisation, ou bien par séchage à une température d'au plus 60 °C.

13. Procédé conforme à la revendication 11 ou 12, dans lequel la biomasse, avant d'être mise en contact avec l'acide organique, est mouillée avec de l'eau ou avec une solution d'au moins un acide organique dans de l'eau.
